# EUROPEAN PATENT APPLICATION

(11) **EP 2 434 386 A1**
(43) Date of publication of application: **28.03.2012**
(21) Application number: 11181951.2
(22) Date of filing: 20.09.2011
(51) Int. Cl.: G06F 3/048, H04N 1/00

(54) **Image processing apparatus, method and program with gradual changes between dispalyed menu windows.**

(30) Priority: 22.09.2010 JP 2010211699
(71) Applicant: Konica Minolta Business Technologies, Inc., Chiyoda-ku Tokyo 100-0005 (JP)
(72) Inventor: Kodama, Kana, Tokyo, 100-0005 (JP); Kurumasa, Yoichi, Tokyo, 100-0005 (JP); Fukuoka, Kaoru, Tokyo, 100-0005 (JP); Imaizumi, Shoji, Tokyo, 100-0005 (JP)
(74) Representative: HOFFMANN EITLE

(57) **Abstract**

An image processing apparatus (1) includes: display means (100); first display control means (10A) for displaying, on the display means (100), a first window for inputting a setting concerned with the plurality of functions; and second display control means (10B) for stepwisely displaying at least a portion of a second window over the first window in a manner corresponding to a type of the second window when the first window is displayed, the second window being for inputting a setting concerned with the plurality of functions.

## Description

This application is based on Japanese Patent Application No. 2010-211699 filed with the Japan Patent Office on September 22, 2010, the entire content of which is hereby incorporated by reference.

### BACKGROUND OF THE INVENTION

### Field of the Invention

The present invention relates to an image processing apparatus and a method for controlling the image processing apparatus, in particular, an image processing apparatus for switching between a plurality of screens to be displayed, a method for controlling such an image processing apparatus, and a storage medium storing a program for controlling the image processing apparatus.

### Description of the Related Art

In recent years, as image processing apparatuses such as digital copiers or MFPs (Multi-Functional Peripherals) are provided with multi-functions, the apparatuses are adapted to be capable of receiving many settings for the apparatuses. Various arts for displaying a plurality of setting screens on such image processing apparatuses have been disclosed.

For example, Literature 1 (Japanese Laid-Open Patent Publication No. 2005-216300) discloses an art by which a plurality of popup screens separately displayed can be operated simultaneously in an image formation apparatus. This achieves improved operability in the image formation apparatus.

In addition, in order to present a larger number of keys, some conventional image processing apparatuses present keys across a plurality of setting screens and switch between the plurality of setting screens to be displayed.

In such an image processing apparatus, the entire setting screen displayed is switched to another setting screen in an instant. When a displayed item on a display apparatus is switched, the user will have such an impression that the displayed item has been suddenly changed. Further, if switching is made in an instant as described above to separately present parts of the keys, which have been presented on one screen in the image processing apparatus, by means of a popup screen or the like, the user may feel as if completely different keys were presented. Specifically, in the conventional image processing apparatuses, setting screens are not switched in such a manner that the user can readily recognize items on the setting screen displayed after the switching. Such switching between the screens makes the user feel alarmed or uneasy.

### SUMMARY OF THE INVENTION

In view of the foregoing problem, the present invention has been made and has its object to provide an image processing apparatus capable of switching between setting screens to allow a user to readily recognize a displayed item on a setting screen displayed after the switching, a method for controlling such an image processing apparatus, and a storage medium storing a control program therefor.

An image processing apparatus according to an aspect of the present invention is an image processing apparatus capable of implementing a plurality of functions, including: display means; first display control means for displaying, on the display means, a first window for inputting a setting concerned with the plurality of functions; and second display control means for stepwisely displaying at least a portion of a second window over the first window in a manner corresponding to a type of the second window when the first window is displayed, the second window being for inputting a setting concerned with the plurality of functions.

A method for controlling an image processing apparatus according to another aspect of the present invention is a method for controlling an image processing apparatus including display means and capable of implementing a plurality of functions, including the steps of: causing the image processing apparatus to display, on the display means, a first window for inputting a setting concerned with the plurality of functions; and causing the image processing apparatus to stepwisely display at least a portion of a second window over the first window in a manner corresponding to a type of the second window when the first window is displayed, the second window being for inputting a setting concerned with the plurality of functions.

A storage medium according to still another aspect of the present invention stores a program for implementing the above-described control method in the image processing apparatus.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows an external appearance of an MFP, which is one embodiment of an image processing apparatus of the present invention.

Fig. 2 is a block diagram for the MFP shown in Fig. 1.

Fig. 3 shows an exemplary basic screen.

Fig. 4 is an exemplary popup screen.

Fig. 5 is an exemplary collective setting screen.

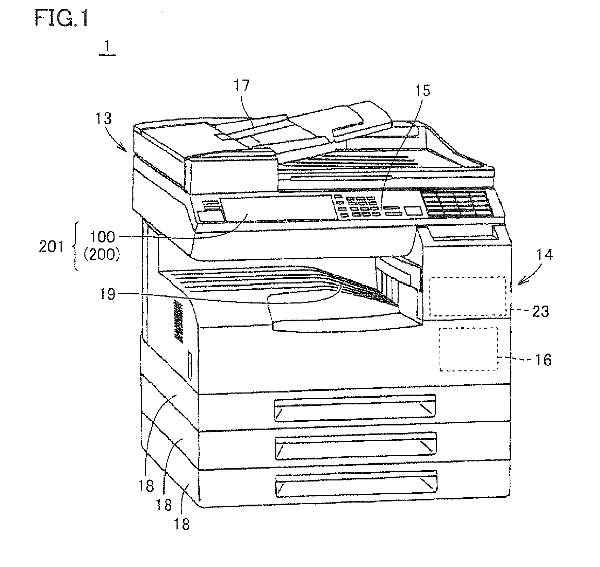

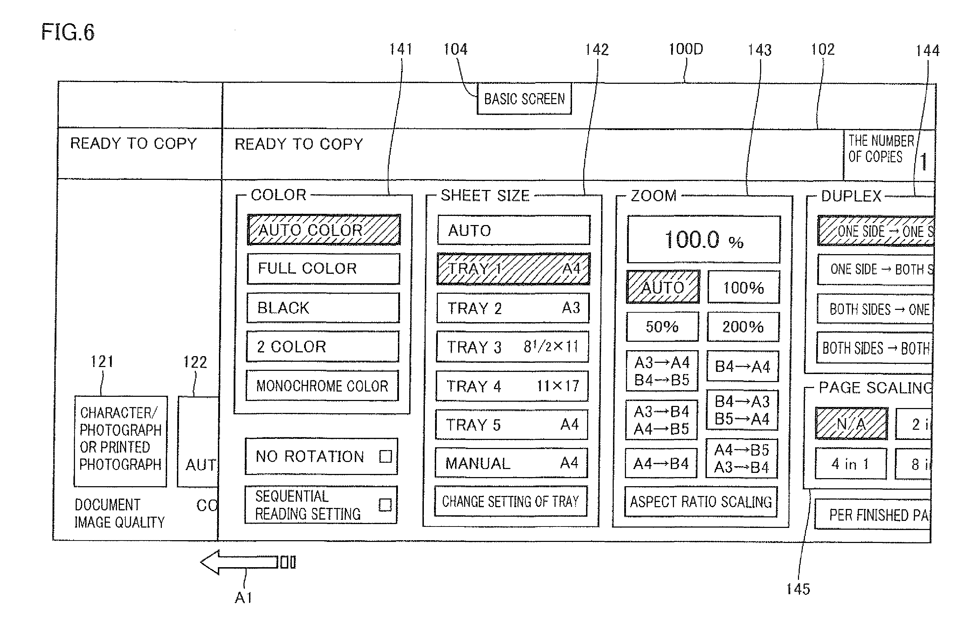

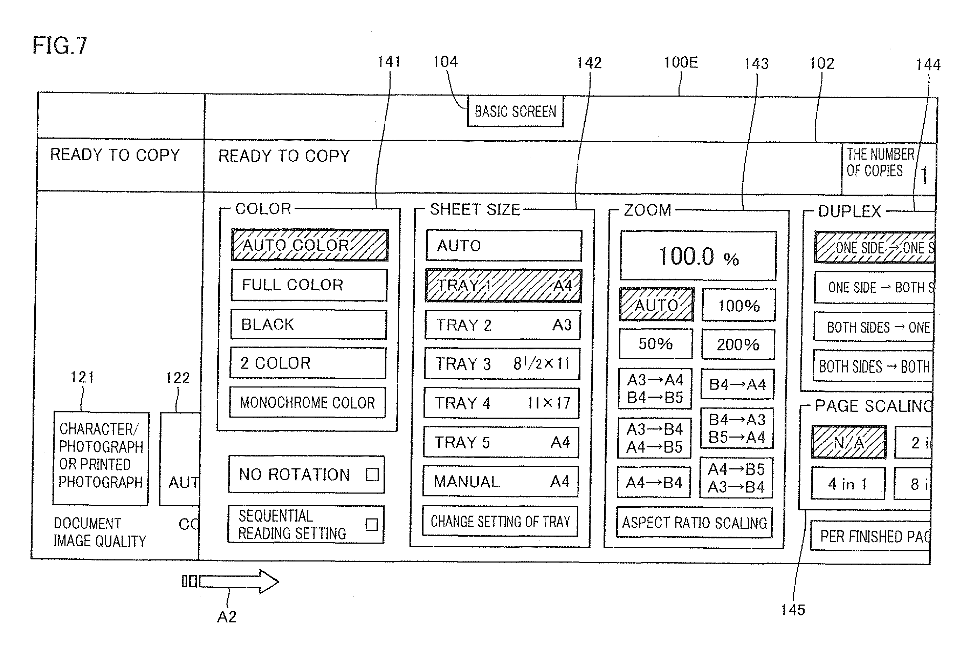

Each of Fig. 6 and Fig. 7 is a diagram for illustrating switching of a screen displayed on a display of the MFP shown in Fig. 1.

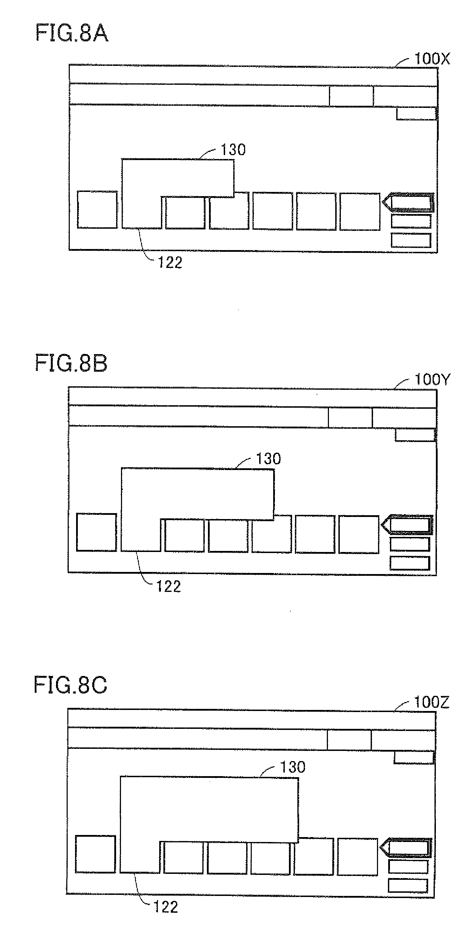

Each of Fig. 8A-Fig. 8C is a diagram for illustrating switching of a screen displayed on the display of the MFP shown in Fig. 1.

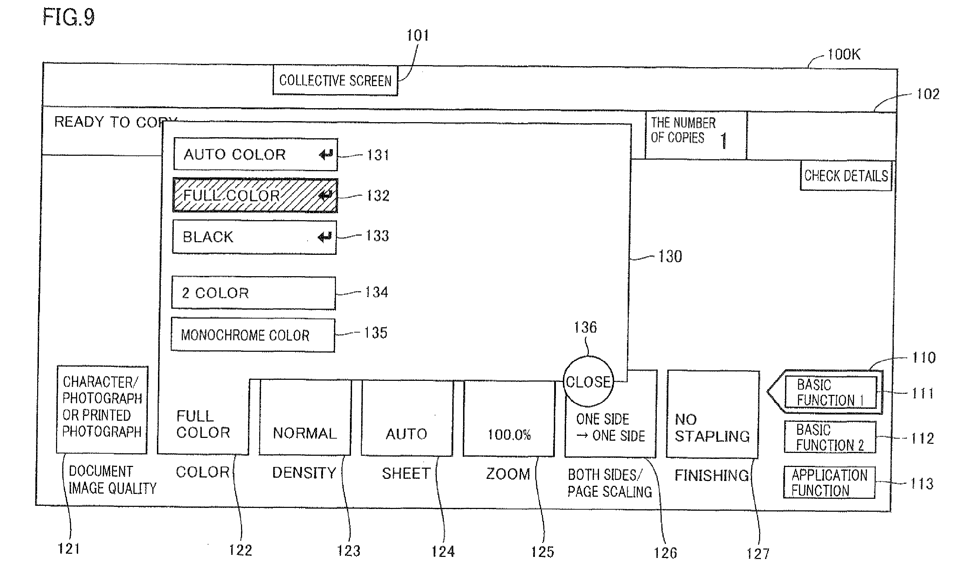

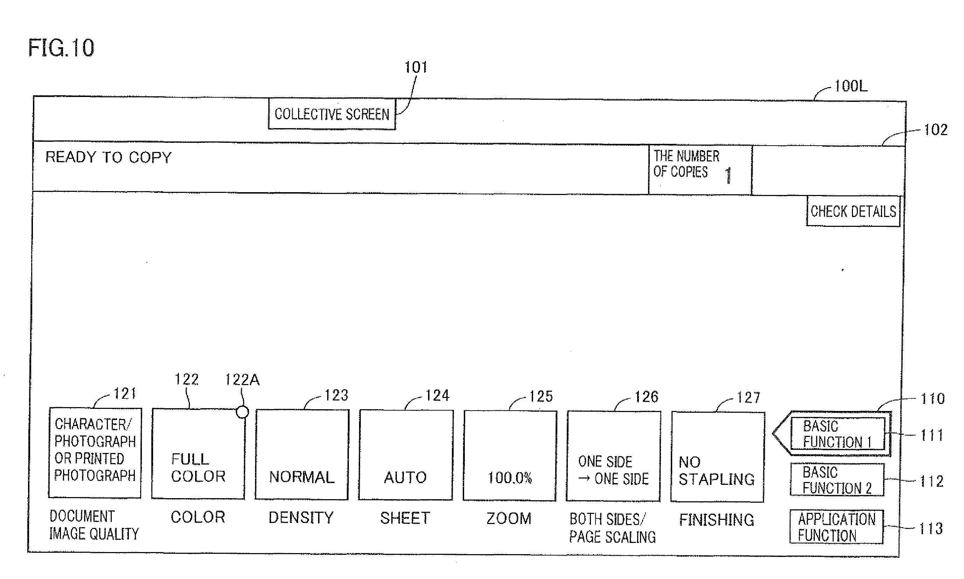

Each of Fig. 9 and Fig. 10 shows an exemplary screen displayed on the display the MFP show in Fig. 1.

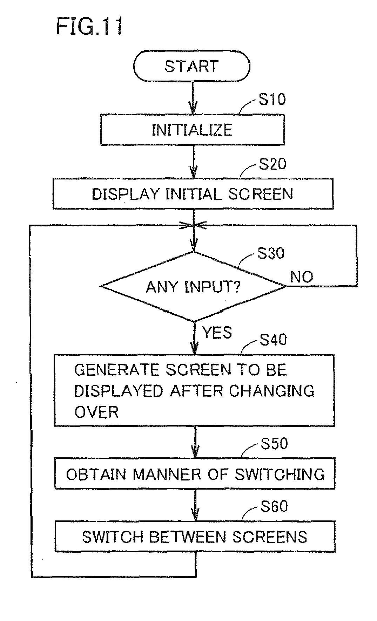

Fig. 11 is a flowchart for a process performed upon switching a screen displayed on the display of the MFP shown in Fig. 1.

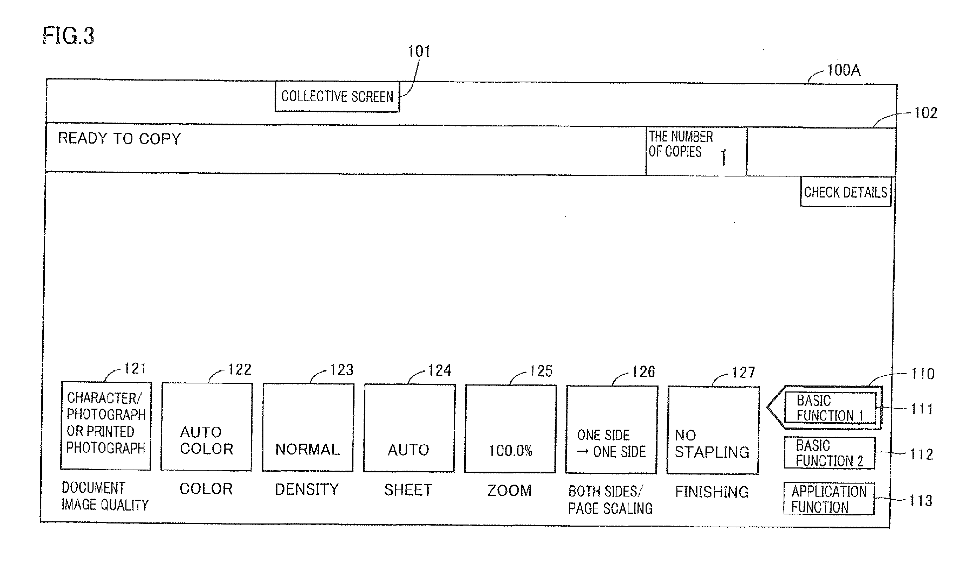

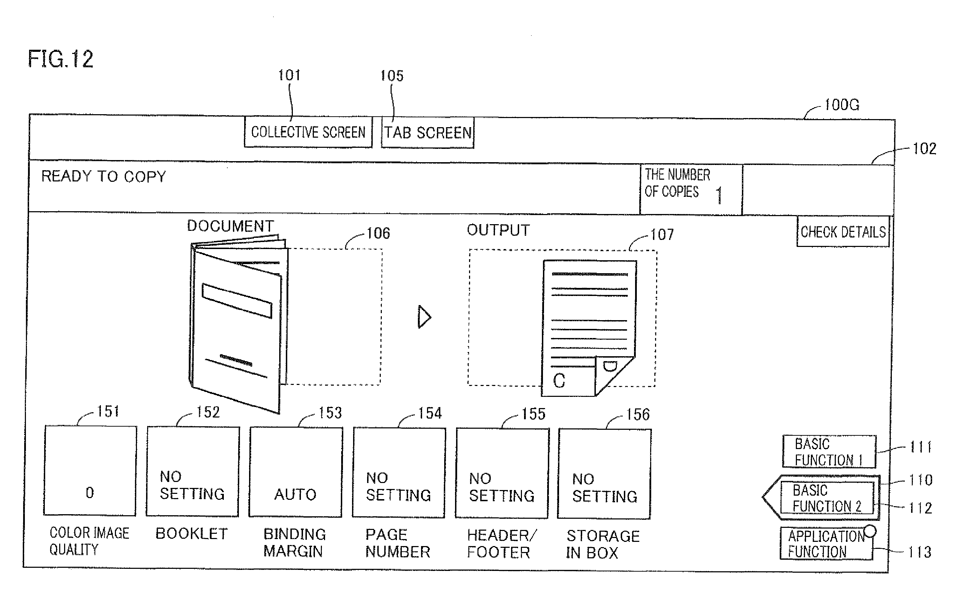

Fig. 12 is an exemplary screen display on display when an icon is selected in the screen shown in Fig. 3.

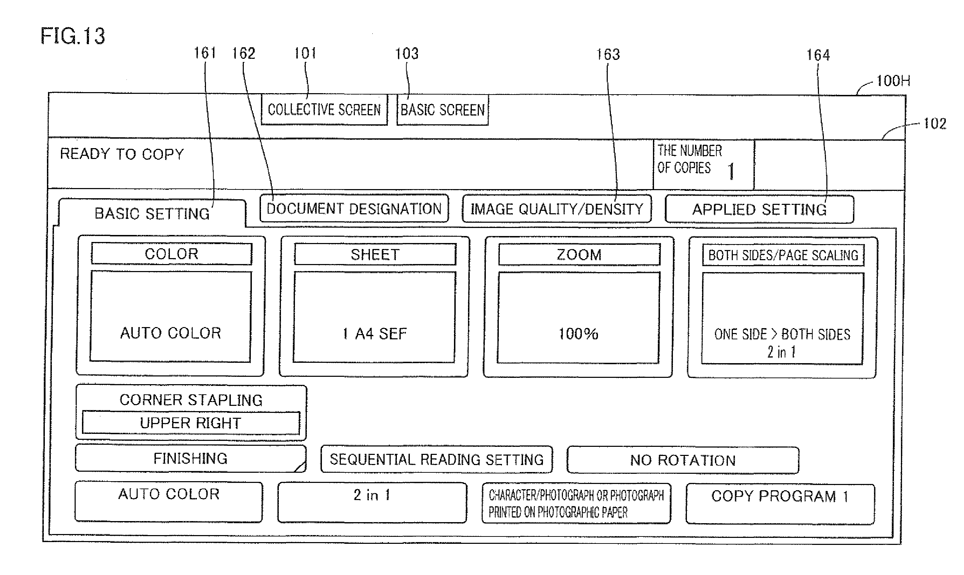

Each of Fig. 13-Fig. 17 shows an exemplary screen displayed on the display of the MFP shown in Fig. 1

### DESCRIPTION OF THE PREFERRED EMBODIMENTS

The following describes an embodiment of an image processing apparatus of the present invention in detail with reference to figures. It should be noted that in each of the figures, elements having the same functions are given the same reference characters and are not described repeatedly.

Fig. 1 shows an external appearance of an MFP 1, which is one embodiment of the present invention.

Referring to Fig. 1, MFP 1 includes a plurality of hard keys 15 for receiving operation instructions for various types of processing, and inputs of characters and numbers.

Further, MFP 1 includes a display 100 for displaying information or the like regarding an operation screen or an image to be subjected to image processing. On display 100, a touch sensor 200 is provided. Display 100 and touch sensor 200 constitute a touch panel 201. MFP 1 displays an operation screen including setting keys or the like on display 100. Further, MFP 1 receives an input of setting from a user by touch sensor 200 detecting a contact operation onto a display area of a setting key. Further, MFP 1 receives an input of setting from the user by detecting an operation on a hard key 15.

MFP 1 includes a scanner unit 13 and a printer unit 14. Scanner unit 13 photoelectrically scans a document to obtain image data thereof. Printer unit 14 prints an image on a sheet based on the image data obtained by scanner unit 13 or image data received from an external device (such as a PC) connected thereto via a network.

Further, at the top of the body of MFP 1, MFP 1 includes a feeder unit 17 for feeding a document to scanner unit 13. At the lower portion of the body of MFP 1, MFP 1 includes sheet supply units 18 for supplying sheets to printer unit 14. At a portion therebetween, MFP 1 includes a tray 19 to which a sheet having an image printed thereon by printer unit 14 is ejected.

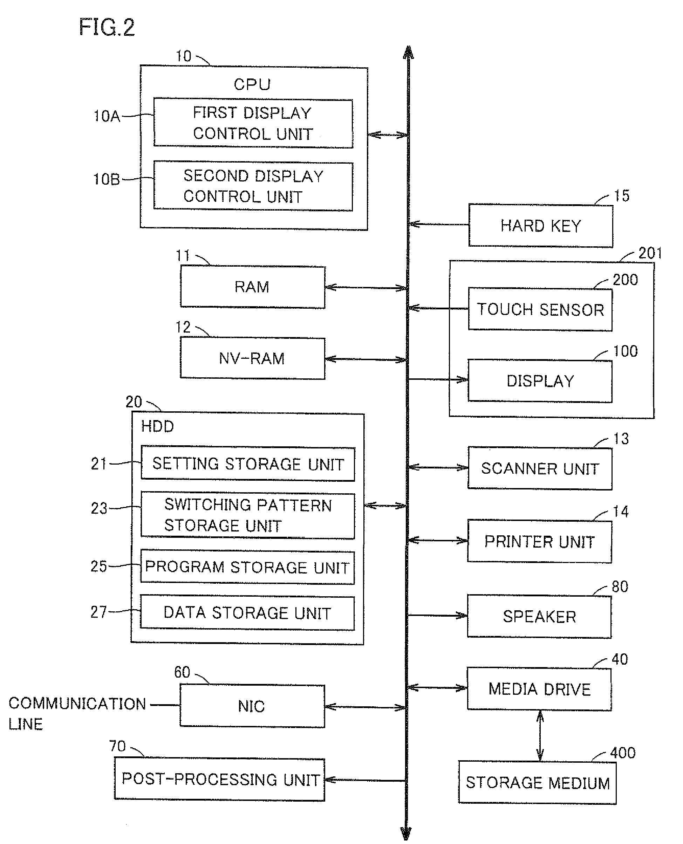

Fig. 2 is a block diagram of MFP 1.

Referring to Fig. 2, MFP 1 includes: a CPU (Central Processing Unit) 10 for entirely controlling an operation of MFP 1; a RAM (Random Access Memory) 11 serving as a work area for CPU 10; and an NV (Non Volatile)-RAM 12 for storing data such as initial settings of the MFP.

MFP 1 further includes a HDD (Hard Disc Drive) 20. HDD 20 includes: a setting storage unit 21 for storing settings regarding functions of MFP 1; a switching pattern storage unit 23 for storing patterns of switching between screens displayed on display 100; a program storage unit 25 for storing a program to be executed by CPU 10; and a data storage unit 27 for storing various types of data.

CPU 10 includes, as its function, a first display control unit 10A for controlling a screen displayed on display 100, and a second display control unit 10B for controlling a manner of switching between screens to be displayed on display 100. Each of first display control unit 10A and second display control unit 10B is implemented by, for example, CPU 10 executing a program stored in program storage unit 25. It should be noted that they may be implemented by hardware such as an LSI (Large Scale Integration) provided exclusively for MFP 1.

Setting storage unit 21 stores, for each of the functions implemented by MFP 1, a setting of a function set (selected) at the moment. Exemplary settings stored in setting storage unit 21 are schematically shown in Table 1.

**[Table 1]**

| | | | | | | | | |
|---|---|---|---|---|---|---|---|---|
| Function | A | B | C | D | E | F | G | H |
| Setting | A-1 | B-1 | C-4 | D-2 | E-3 | F-1 | G-2 | H-1 |
| Function | I | J | R | S | K | L | M | N |
| Setting | 1-2 | J-3 | R-1 | S-1 | K-1 | L-1 | M-1 | N-1 |
| Function | O | P | Q | T | U | V | W | X |
| Setting | O-1 | P-1 | Q-1 | T-1 | U-1 | V-1 | W-1 | X-1 |

In Table 1, for ease of description, names of the plurality of functions of MFP 1 are respectively indicated by alphabets such as A, B, C, D.... Further, in Table 1, for ease of description, a setting set at the moment for each function is indicated by rendering a number to the name of the function, such as A-1, B-1, C-4, D-2....

Examples of the functions herein include: an image scanning function implemented by scanner unit 13; an image formation function implemented by printer unit 14; an function of adjusting a color of an image formed on a sheet (color adjustment function); a function of adjustment of a base for the image formed on the sheet; and a function of negative/positive inversion.

Further, examples of the settings include: a setting for image scanning resolution (300 dpi (dot per inch), 600dpi, or the like) in the image scanning function; a setting for resolution in the image formation function; a setting for a color in the color adjustment function (full color printing, monochrome printing, or the like); a setting for specifying whether to utilize the function of base adjustment upon image formation (ON/OFF for base adjustment); and a setting for specifying whether to utilize the function of negative/positive inversion upon image formation (ON/OFF for negative/positive inversion).

In the present embodiment, the setting for each function can be changed by, for example, the user selecting a setting key presented in a popup window as described below.

Switching pattern storage unit 23 stores a manner of switching corresponding to a combination of screens displayed on display 100 before and after the switching. Exemplary manners of switching stored in switching pattern storage unit 23 are schematically shown in Table 2.

**[Table 2]**

| Screen Before Switching | Screen After Switching | Switching Pattern |
|---|---|---|
| Basic Screen (Including No Popup Window) | Basic Screen (Including Popup Window) | Stepwise Appearance of Popup Window |
| Basic Screen (Including Popup Window) | Basic Screen (Including No Popup Window) | Stepwise Disappearance of Popup Window |
| Basic Screen (Including No Popup Window) | Collective Setting Screen | Sliding |
| Collective Setting Screen | Basic Screen (Including No Popup Window) | Sliding |

In Table 2, when the screen before changing over is a basic screen described below and including no popup window and the screen after changing over is a basic screen including a popup window, a manner of the switching therebetween is such that the popup window stepwisely appears (as illustrated in Fig. 8A-Fig. 8C below). Meanwhile, when the screen is changed over from a basic screen including a popup window to a basic screen including no popup window, a manner of the switching therebetween is such that the popup window stepwisely disappears.

On the other hand, when the screen before changing over is a basic screen including no popup window and the screen after changing over is a below-described collective setting screen, a manner of the switching therebetween is sliding (as illustrated in Fig. 6 below). Further, when the screen before changing over is a collective setting screen and the screen after changing over is a basic screen including no popup window, a manner of the switching therebetween is also sliding.

In the present embodiment, it is assumed that the program executed by CPU 10 is stored in program storage unit 25 but may be stored in a storage medium 400 or may be downloaded from an external device via an below-described NIC (Network Interface Card) 60.

MFP 1 includes NIC 60 for transmitting/receiving data such as image data to/from an external device via a communication line such as a public telephone line or an LAN (Local Area Network). NIC 60 transmits/receives facsimile data via a public telephone line, and transmits/receives data to/from an external device connected thereto via a network such as a LAN or the Internet using an e-mail system or a file transfer system. Accordingly, MFP 1 has not only a function as a facsimile device for normal facsimile communication, but also functions as an e-mail transmitting/receiving terminal and a file transmitting/receiving terminal. It should be noted that the communication by MFP 1 may be wired or wireless.

MFP 1 further includes: a post-processing unit 70 for providing post processing such as stapling onto a sheet having an image formed thereon by printer unit 14; a media drive 40 for performing processing of reading/writing data from/in storage medium 400 detachably attached to the main body of MFP 1: and a speaker 80 for outputting a sound. It should be noted that hard key 15, touch sensor 200, display 100, scanner unit 13, and printer unit 14 are the same as described above and are therefore not described here.

In MFP 1 of the present embodiment, screens for selecting settings of functions of MFP 1 are displayed on display 100. Such screens include the basic screen and the collective setting screen.

The basic screen is a screen displayed when MFP 1 operates in an input mode (basic mode) for selecting a function whose setting is to be selected in MFP 1.

Fig. 3 shows an exemplary basic screen. Referring to Fig. 3, icons 121-127 corresponding to the functions of MFP 1 are presented in screen 100A.

Icon 121 is an icon, concerned with the image scanning function implemented by scanner unit 13, for selecting, as a setting, a parameter of image processing to be provided to a scanned image.

Icon 122 is an icon, concerned with the image formation, function implemented by printer unit 14, for inputting setting information for the function (color adjustment function) of adjusting color (full color printing, monochrome printing, or the like) of an image to be formed on a sheet.

Icon 123 is an icon, concerned with the image formation function implemented by printer unit 14, for inputting information for adjusting print density.

Icon 124 is an icon, concerned with the sheet supplying function implemented by sheet supply unit 18, for inputting setting information regarding a type of sheet to be supplied to printer unit 14.

Icon 125 is an icon, concerned with the image formation function implemented by printer unit 14, for inputting information for setting a zoom ratio of the size of the image to be formed on the sheet relative to the image size of the document.

Icon 126 is an icon, concerned with the image formation function implemented by printer unit 14, for inputting one-side/both-side information regarding whether to scan image(s) from one side or both sides of a document and whether to form image(s) on one side or both sides of a sheet.

Icon 127 is an icon for inputting information for setting whether to enable/disable the stapling function implemented by post-processing unit 70.

Each of icons 121-127 corresponds to a function key for selecting a function in the basic screen. Each of icons 121-127 shows a setting set (selected) at the moment as a setting of the function corresponding to the icon (for example, icon 121 shows a character string "CHARACTER/PHOTOGRAPH OR PRINTED PHOTOGRAPH"). It should be noted that first display control unit 10A makes reference to settings of each function in setting storage unit 21 (Table 1) so as to determine a setting to be shown in each of icons 121-127 and show it as illustrated in Fig. 3.

Screen 100A includes: a switching key 101 for switching the screen displayed on display 100 to a collective setting screen; and a status display portion 102 for displaying a status of MFP 1. The collective setting screen will be described later in detail.

Screen 100A also presents keys 111-113 3 for changing over among groups of icons to be presented in the basic screen on display 100; and a pointer 110 for indicating which one of keys 111-113 a currently presented group of icons corresponds to.

In MFP 1, the plurality of functions in MFP 1 are divided into three groups respectively corresponding to keys 111-113 (basic function 1 group, basic function 2 group, and application function group). In display 100, a screen for presenting icons of a group corresponding to a key selected from keys 111-113 is displayed as a basic screen such as screen 100A. It should be noted that in display 100, pointer 110 is displayed to surround the key selected from keys 111-113 and corresponding to the group whose icons are presented in the basic screen.

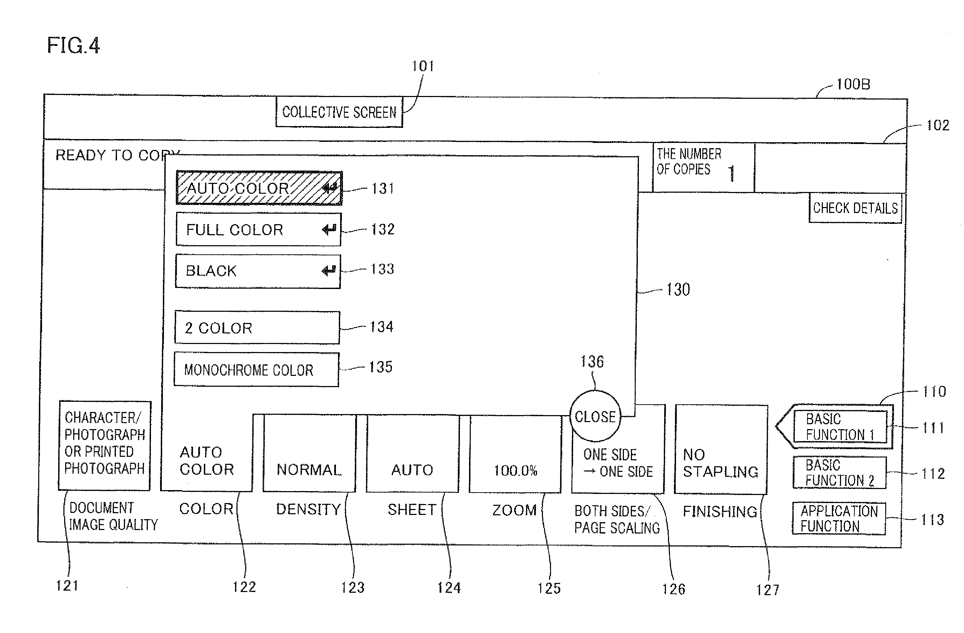

Fig. 4 shows an exemplary screen (popup screen) including a popup window.

Referring to Fig. 4, in a screen 100B, a popup window 130 is laid over screen 100A of Fig. 3.

Popup window 130 presents settings regarding the function corresponding to icon 122 shown in Fig. 3. When icon 122 is selected on the displayed basic screen shown in Fig. 3, CPU 10 switches the screen displayed on display 100 from screen 100A (basic screen including no popup window) to screen 100B (basic screen including a popup window).

Popup window 130 presents, as icons 131-135, candidates of a setting for the function corresponding to icon 122. Icons 131-135 constitute setting keys for inputting settings. It should be noted that an icon corresponding to a setting for a function stored in setting storage unit 21 ("A-1" for function A or the like in Table 1) is presented in a manner different from the other icons. Fig. 4 shows that "AUTO COLOR" is recorded as a setting for the color adjustment function. In addition, in popup window 130 of Fig. 4, icon 131 corresponding to the "AUTO COLOR" is presented in a color different from those of icons 132-135.

In popup window 130, a key 136 for closing the displayed popup window 130 is presented.

Popup window 130, which is displayed in response to the selection of icon 122 on screen 100A, may be closed after passage of a predetermined time (for example, 5 seconds) from the start of displaying popup window 130, may be closed in response to selection of key 136, or may be closed in response to selection among icons 131-135 in popup window 130. When popup window 130 is closed, the screen displayed on display 100 reverts to screen 100A shown in Fig. 3.

In MFP 1, it is assumed that selection of one of icons 121-127 on screen 100A corresponds to selection of the function corresponding to the icon thus selected. Accordingly, a popup screen including a popup window corresponding to the selected function is displayed on display 100 as illustrated in screen 100B of Fig. 4.

In MFP 1, when one of icons 131-135 in the displayed popup window is selected, information for inputting a setting corresponding to the icon is selected. When the information for inputting is selected, CPU 10 updates the setting stored in setting storage unit 21, in accordance with the information.

Further, when one of icons 131-135 is selected, a manner of presentation of the icon is changed. Fig. 9 shows a screen 100K displayed on display 100 when icon 132 in popup window 130 of Fig. 4 is selected. In screen 100B of Fig. 4, icon 131 is presented in a manner different from the other icons in popup window 130. When icon 132 is selected, icon 132 is presented in a manner different from the other icons in screen 100K.

When an icon is selected in popup window 130 and accordingly a setting therefor is updated, a manner of presentation of the icon in the basic screen is changed. For example, when the setting for the function corresponding to icon 122 is changed by selecting icon 132 in popup window 130 displayed corresponding to icon 122 as described with reference to Fig. 9, the setting for the function in setting storage unit 21 is updated to the setting thus selected, and the basic screen is changed to, for example, a screen 100L shown in Fig. 10. In screen 100L, a mark 122A is attached to icon 122 presented. Mark 122A represents the function with its setting thus changed from the default setting. In icon 122 of screen 100L of Fig. 10, "FULL COLOR" is selected as a setting applied to the color adjustment function after the changing.

Referring back to Fig. 3, also when icon 121 or icons 123-127 is selected in screen 100A, a popup corresponding to the selected icon is displayed as with popup window 130.

The collective setting screen is a screen for collectively presenting candidates of settings for the plurality of functions in MFP 1. MFP 1 can operate, as the above-described basic mode, in a mode in which a basic screen is first displayed as a screen for allowing the user to select a setting for each function and thereafter a screen including a popup window presenting settings for the selected function is displayed to allow him/her to select a setting therefrom, whereas MFP1 can also operate in a collective setting mode in which a collective setting screen is displayed to present settings for a plurality of functions and allow the user to directly select settings for the plurality of functions from the collective setting screen.

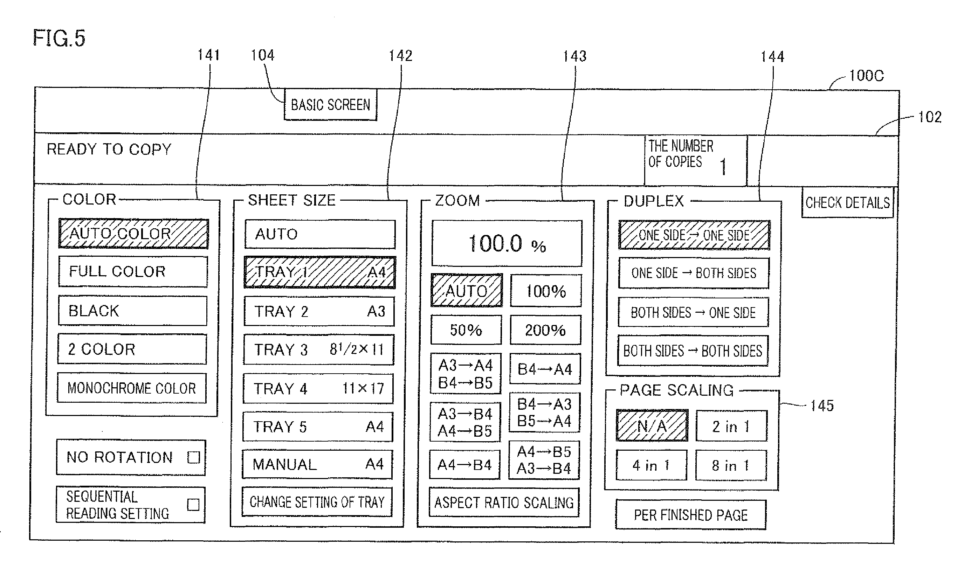

Fig. 5 shows one exemplary collective setting screen. In screen 100C of Fig. 5, areas 141, 142, 143, 144, 145 are presented. Each of areas 141, 142, 143, 144, 145 includes keys for selecting settings for the functions respectively.

It should be noted that, in the collective setting screen and the basic screen, a setting can be determined for each function in the same manner.

In area 141, a plurality of icons for inputting settings concerned with color are presented. The icons in area 141 are icons for inputting settings for the function corresponding to icon 122 shown in Fig. 3 and correspond to the icons in popup window 130 shown in Fig. 4.

Presented in area 142 are a plurality of icons for inputting settings concerned with a sheet size. The icons in area 142 are icons for inputting settings concerned with the function corresponding to icon 124 shown in Fig. 3.

Presented in area 143 are a plurality of icons for inputting settings concerned with the zoom ratio. The icons in area 143 are icons for inputting settings concerned with the function corresponding to icon 125 shown in Fig. 3.

Presented in area 144 are a plurality of icons for inputting settings concerned with one-side/both-side. The icons in area 144 are icons for inputting a part of settings concerned with the function corresponding to icon 126 shown in Fig. 3.

Presented in area 145 are a plurality of icons for inputting settings concerned with a page scaling. The icons in area 141 are icons for inputting a part of settings concerned with the function corresponding to icon 126 shown in Fig. 3.

Further, in screen 100C, a display switching key 104 is presented to switch the screen displayed on display 100 to the basic screen.

In each of areas 141-145, an icon corresponding to a setting currently set therein (setting stored in setting storage unit 21) is presented in a manner different from the other icons in the same area.

As described above, when switching key 101 is selected while screen 100A shown in Fig. 3 is displayed on display 100, CPU 10 switches the screen displayed on display 100 to the collective setting screen such as screen 100C shown in Fig. 5.

It should be noted that when switching the screen displayed on display 100, CPU 10 stepwisely switches the screen displayed on display 100 between two screens. In other words, for example, when switching from the basic screen (not including a popup window) to the collective setting screen, the screen supposed to be displayed after the switching is slid into display 100 over the screen displayed before the switching. The expression "stepwisely switch" indicates that at least one intermediate state between both the screens is displayed on display 100 while switching from the screen supposed to be displayed before the switching to the screen supposed to be displayed after the switching. When switching from screen 100A to screen 100C, an intermediate state therebetween displayed on display 100 is a screen 100D shown in Fig. 6. Screen 100D represents an intermediate state in which screen 100C is being gradually laid over screen 100A in a direction of arrow A1.

Further, when display switching key 104 is selected in screen 100C of Fig. 5, the screen displayed on display 100 is switched from screen 100C to screen 100A shown in Fig. 3. The switching between the two screens is also made stepwisely on display 100.

For example, the screen displayed on display 100 is switched in the following manner. That is, when display switching key 104 is selected in the state shown in Fig. 5, the entire screen currently displayed on display 100 is not replaced at once with screen 100A, which is a screen to be displayed after the switching. Instead, screen 100C is slid away to the right side in a direction of arrow A2 in Fig. 7, thus increasing a ratio of the displayed area of screen 100A, which is supposed to be displayed after the switching. In the end, only screen 100A is displayed on display 100.

Further, also when presenting a popup window in the basic screen in MFP 1, the popup window gradually appears.

Specifically, when switching from screen 100A shown in Fig. 3 to screen 100B shown in Fig. 4, the screen displayed on display 100 is changed to a screen 100X shown in Fig. 8A, then a screen 100Y shown in Fig. 8B, and then a screen 100Z shown in Fig. 8C. In other words, the screen displayed thereon is switched from screen 100A to screen 100B with icons 122 getting expanded, i.e., popup window 130 gradually getting larger and larger.

It should be noted that when switching the screen displayed on display 100 from screen 100B back to screen 100A, popup window 130 displayed is changed to the states shown in Fig. 8C, Fig. 8B, Fig. 8A in this order, thus gradually getting smaller and smaller.

In the present embodiment described above, the screen displayed on display 100 is gradually changed when switching the screen displayed on display 100 or when introducing a popup window.

It should be noted that a manner of switching in this case may be such that the screen supposed to be displayed after changing over between the screens is slid into display 100 as described with reference to Fig. 6, or may be such that a portion (popup window 130) supposed to be displayed after changing over therebetween gradually expands its displayed area as described with reference to Fig. 8A-Fig. 8C.

An alternative, exemplary manner of switching may be of changing over between screens by displaying both the screens, which are supposed to be displayed before and after the changing, in a mosaic manner on a plurality of blocks obtained by dividing the display area of display 100.

Further, a manner of switching between screens may be selected from a plurality of manners, depending on a matter presented on the screen supposed to be displayed after the switching, or a relation between the screens displayed before and after the switching. Namely, in presenting detailed information (popup window 130), concerned with a part (icon 122) of the screen displayed before changing over therebetween, in the screen displayed after changing over therebetween as with switching from screen 100A to screen 100B, the switching between the screens is made in such a manner that the part of the screen displayed before changing over gradually expands (Fig. 8A-Fig. 8C). On the other hand, in switching the entire screen displayed on display 100 in response to an operation of changing the input mode between the basic mode and the collective setting mode (operation of selecting switching key 101 or display switching key 104), the switching is made in such a manner that the screen supposed to be displayed before or after changing is slid and moved as described with reference to Fig. 6 and Fig. 7.

Namely, only when newly presenting a window concerned with a part of a screen as in the case where a popup window is presented, the screen displayed thereon is changed in a manner concerned with that part of the screen. In this way, the user can readily recognize that the window newly presented is concerned with the part thereof.

Further, when switching the entire screen by changing the mode from the basic mode to the collective setting mode, the screen currently displayed is slid and moved to allow the user to readily recognize that the screen displayed after the switching represents an input mode different from that of the screen displayed before the switching.

Preferably, speed of the sliding and speed of the expanding of the popup window are adapted to be changeable by the user. Further, the speeds may be set for each user, and the speeds may be switched depending on a user using MFP 1.

Further, CPU 10 preferably does not accept an operation onto touch sensor 200 during a period of switching the entire screen displayed thereon. This is to prevent the user from wrongly operating it because the location of the key presented in screen is moving during this period.

In the present embodiment described above, the key for switching to the collective setting mode (switching key 101 of screen 100A shown in Fig. 3) in the screen of the basic mode, and the key for switching to the basic mode in the screen of the collective setting mode (display switching key 104 in screen 100C shown in Fig. 5) are presented in the same location (upper portion of the display area) in display 100. Accordingly, by providing an operation onto the same location in display 100, the input mode can be switched between both the modes, thus allowing the user to readily switch the input mode.

Further, in order to notify the user of existence of the plurality of input modes, the basic screen and the collective setting screen may be displayed alternately on display 100 as a demonstration mode upon startup of MFP 1 or the like, for example.

Further, in MFP 1, the user can set an arrangement of the keys in each of the basic screen and the collective setting screen. In particular, MFP 1 is preferably configured to allow the user to changeably allocate functions to respective groups of keys 111-113 in the basic screen. The arrangements of the keys in each screen and the functions corresponding to the groups are recorded in, for example, HDD 20. The user can change the functions allocated to the keys 111-113, depending on how frequent the settings for the functions are changed or the like. Further, in MFP 1, one of the basic screen and the collective setting screen can be set as a screen displayed on display 100 by default.

It should be noted that a sound may be output as a sound effect via speaker 80 upon switching between the screens. A type of sound to be output may be changed depending on a type of switching (switching of the entire screen or appearance or disappearance of a popup window). Further, the types of the sound effect are preferably set by the user. Further, a type of sound effect may be set for each user, and the type of sound effect may be switched depending on a user using MFP 1.

Fig. 11 is a flowchart of a process performed upon switching the screen displayed on display 100 in MFP 1.

Referring to Fig. 11, when MFP 1 is powered on, CPU 10 initializes various types of settings of MFP 1 in a step S 10 and then proceeds with the process to a step S20.

In step S20, CPU 10 displays an initial screen on display 100 and then proceeds with the process to a step S30. The initial screen can be, for example, the basic screen shown in Fig. 3.

In step S30, CPU 10 determines whether or not an input has been provided to touch sensor 200. When it is determined that an input has been provided, CPU 10 proceeds with the process to a step S40.

In step S40, depending on a location at which the input has been provided to touch sensor 200, CPU 10 generates a screen to be displayed on display 100 after changing over between the screens, and proceeds with the process to a step S50. In step S50, based on matters on the screen displayed on display 100 before changing and the screen displayed thereon after changing, CPU 10 obtains information for specifying a manner of switching between the screens (Table 2), which is stored in switching pattern storage unit 23, and then proceeds with the process to a step S60.

In step S60, in accordance with the manner of switching obtained in step S50, CPU 10 switches from the screen displayed on display 100 to the screen generated in step S40 and supposed to be displayed after changing, and then brings the process back to step S30.

As another example of the basic screen, Fig. 12 shows an exemplary screen displayed on display 100 when icon 112 is selected in screen 100A shown in Fig. 3. Switching from screen 100A shown in Fig. 3 to screen 100G shown in Fig. 12 is not switching to a screen corresponding to a different input mode, and is also not switching to a popup screen. Hence, the switching from screen 100A to screen 100G is made directly. In other words, the switching is not made stepwisely.

Referring to Fig. 12, in screen 100G, icons 151-156 are displayed instead of icons 121-127 of screen 100A. Each of icons 151-156 is an icon for inputting setting information concerned with a function of MFP 1, and is an icon of the group corresponding to icon 112. In screen 100G, in order to indicate that icons 151-156 are icons corresponding to icon 112, a pointer 110 is presented to surround icon 112.

Further, in MFP 1, as shown in the basic screen of screen 100G, image representations 106, 107 may be presented to indicate a relation between a document and an image to be formed on a sheet based on the document.

Further, as an exemplary screen displayed in an input mode different from the above-described basic mode and collective setting mode, MFP 1 of the present embodiment is capable of assigning, to a plurality of tabs, a plurality of icons for selecting functions whose settings are to be input to MFP 1 such as icons 121-127, and displaying them on display 100.

A screen 100H in Fig. 13 presents tabs 161-164 in an area 160. In screen 100H, icons corresponding to tab 161 of tabs 161-164 are presented.

MFP 1 is also capable of switching between screen 100G shown in Fig. 12 and screen 100H shown in Fig. 13. Screen 100G shown in Fig. 12 includes a switching key 105 for switching the screen displayed on display 100 to screen 100H. Screen 100H shown in Fig. 13 includes an icon 103 for switching the screen displayed on display 100 to screen 100G.

The screen displayed on display 100 is also gradually (stepwisely) switched from screen 1000 to screen 100H by sliding, onto the currently displayed screen, the screen supposed to be displayed after changing over therebetween as described with reference to Fig. 6, for example.

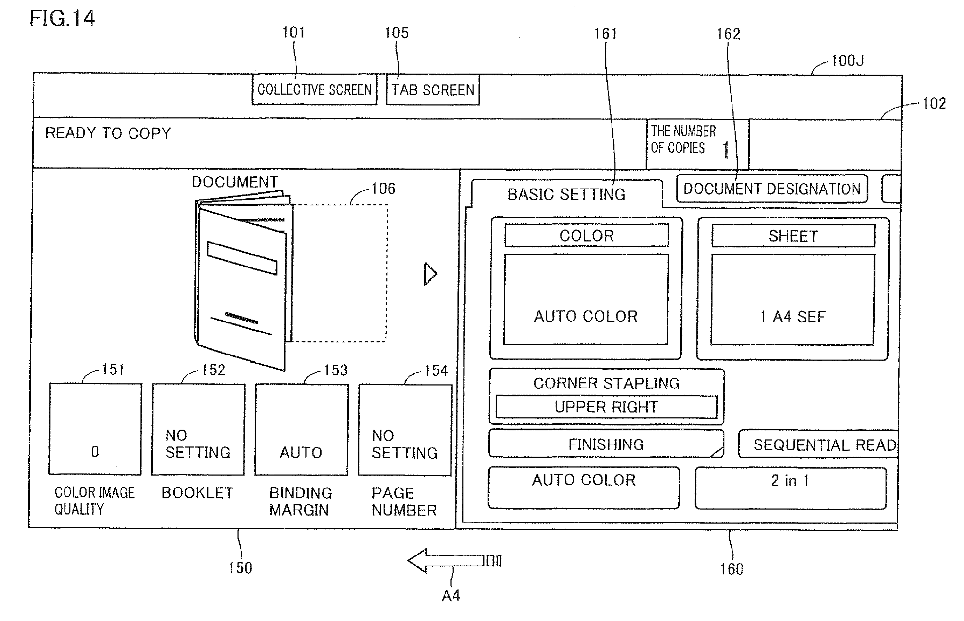

In MFP 1, at least part of switching of the screen displayed on display 100 may be made gradually. When the screens displayed before and after the switching have a common portion, only different portions may be gradually switched while the common portion is not changed by sliding or the like. In this case, for example, as illustrated as screen 100J in Fig. 14, in the course of switching between the screens, an image of screen 100H supposed to be displayed after changing over therebetween is laid over screen 100G displayed before changing over therebetween, and is gradually slid and moved in a direction of arrow A4. Status display portion 102 is common between screen 100G and screen 100H. Hence, in screen 100J shown in Fig. 14, status display portion 102 is not slid. Further, an area in which switching key 101 and switching key 105 exist is not switched gradually but is switched at once.

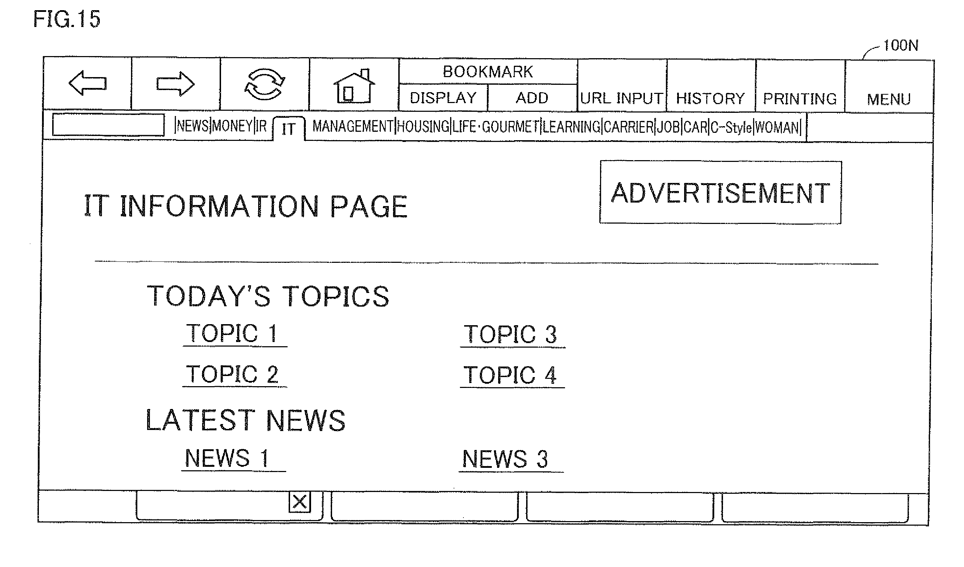

Further, in display 100 of MFP 1, as another exemplary display screen in an input mode different from the basic mode and the collective setting mode, various processing screens shown in Fig. 15-Fig. 17 can be displayed, for example.

Fig. 15 shows a screen 100N presenting a web page downloaded via NIC 60 from the network. Screen 100N of Fig. 15 presents character strings respectively provided with links, such as "TOPIC 1 ". When this character string is selected, the screen displayed on display 100 is switched to a screen linked to the character string. This switching between the screens is also made gradually as described with reference to Fig. 6.

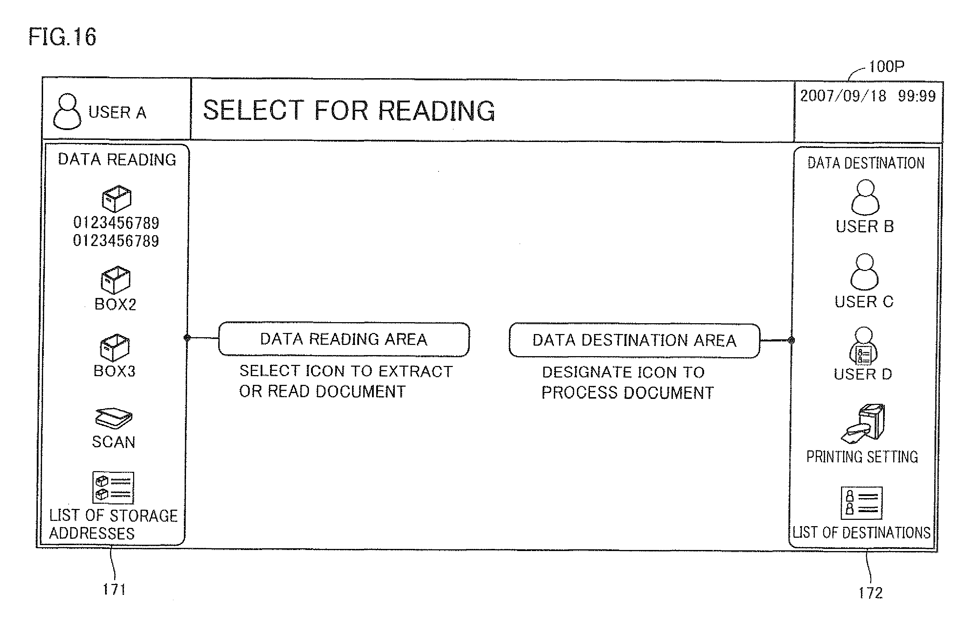

Further, Fig. 16 shows a screen 100P, which is a selection screen for file transmission via NIC 60. Screen 100P includes: an area 171 for designating a storage location of a file to be transmitted; and an area 172 for designating a transmission destination. In area 171, screen 100P in Fig. 16 presents icons for designating storage locations such as "0123456789" and "BOX 2". When each icon is selected, the screen displayed on display 100 is switched to a screen indicating files and folders in a directory corresponding to the icon. The switching between the screens in this case is also made stepwisely as described with reference to Fig. 6.

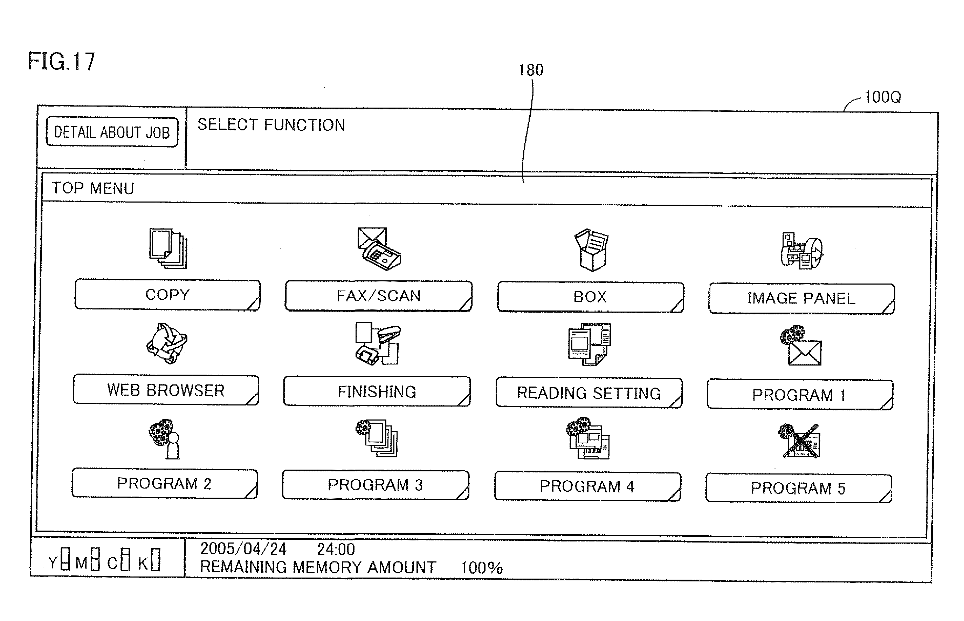

Further, Fig. 17 shows a menu screen 100Q, which is a still another variation of the basic screen. Menu screen 100Q is a screen for selecting a process to be performed in MFP 1. In an area 180 thereof, a plurality of icons are presented which respectively correspond to processes that can be performed by MFP 1, such as "COPY" and "FACSIMILE/SCAN". When each icon is selected in area 180 of Fig. 17, the screen displayed in display 100 is switched to a screen presenting a setting for a process corresponding to the icon. The switching between the screens in this case is also made stepwisely as described with reference to Fig. 6.

The switching between each of the processing screens shown in Fig. 15-Fig.17 and each of the basic screen and the collective setting screen may be made in the sliding manner as described with reference to Fig. 6, or may be made stepwisely but in a manner different from the switching between the basic screen and the collective setting screen.

As variations of the manner of switching, variations of patterns stored in switching pattern storage unit 23 are shown in Table 3.

**[Table 3]**

| Screen Before Switching | Screen After Switching | Switching Pattern |
|---|---|---|
| Basic Screen (Including No Popup Window) | Basic Screen (Including Popup Window) | Stepwise Appearance of Popup Window |
| Basic Screen (Including Popup Window) | Basic Screen (Including No Popup Window) | Stepwise Disappearance of Popup Window |
| Basic Screen (Including No Popup Window) | Collective Setting Screen | Sliding |
| Collective Setting Screen | Basic Screen (Including No Popup Window) | Sliding |
| Basic Screen (Including No Popup Window) | Processing Screen | Mosaic |
| Processing Screen | Basic Screen (Including No Popup Window) | Mosaic |
| Collective Setting Screen | Processing Screen | Fade-in |
| Processing Screen | Collective Setting Screen | Fade-in |

In addition to the patterns shown in Table 2, Table 3 shows a pattern of switching between the basic screen including no popup window and a processing screen, as well as a pattern of switching between the collective setting screen and the processing screen.

Specifically, the switching from the basic screen including no popup window to the processing screen, and the switching from the processing screen to the basic screen including no popup window are made in the above-described mosaic manner.

Further, the switching from the collective setting screen to the processing screen and the switching from the processing screen to the collective setting screen are made in such a manner that the screen supposed to be displayed after the switching is faded in to the screen displayed before the switching.

Namely, in the present embodiment, as shown in Table 3, a pattern of switching may differ depending on a combination of types of screens displayed before and after the switching.

Further, in the present embodiment, switching between screen 100A shown in Fig. 3 and screen 100G shown in Fig. 12 may be made in a stepwise manner such as the sliding manner.

In the present embodiment described above, the basic screen includes the function keys (icons 121-127) corresponding to the functions, and is a window corresponding to a first input mode (basic mode) for receiving selection of a function. The popup window is a window for presenting a setting key for inputting a setting corresponding to the selected function in response to the selection of the function key in the basic screen. Further, the collective setting screen is a window for presenting setting keys for inputting settings corresponding to a plurality of functions, and is a window corresponding to a second input mode (collective setting mode) for receiving selection of the setting keys. As such, the term "window" in the present embodiment encompasses an object displayed in the entire display area of display 100 (screen), and an object displayed on a portion of the display area.

The present invention can be implemented by providing a program to an image processing apparatus. In addition, an effect of the present invention can be attained by: providing a system or an apparatus with a storage medium (storage medium 400) storing a program represented by software for implementing the present invention; and a computer (CPU or MPU (Micro-Processing Unit)) of the system or the apparatus reading and executing a program code stored in the storage medium.

In this case, the program code thus read from the storage medium implements the functions of the embodiment, and the storage medium having the program code stored therein constitutes the present invention.

Further, the present invention encompasses not only a case where the functions of the embodiment described above are implemented by executing the program code read by the computer, but also a case where the functions of the embodiment described above is implemented by an actual process, a part of or all of which is performed based on a command of the program code by an OS (operating system) or the like operating on the computer.

Further, the present invention also encompasses a case where the program code read from the storage medium is written in a memory provided in a extension board inserted into the computer or an extension unit connected to the computer, and then based on the command of the program code, the CPU or the like provided in the extension board or the extension unit performs a part of or all of the actual process to implement the functions of the above-described embodiment.

Examples of the storage medium include mediums each storing the program in a non-volatile manner, such as a CD-ROM (Compact Disc-Read Only Memory), a DVD-ROM (Digital Versatile Disk-Read Only Memory), a USB (Universal Serial Bus) memory, a memory card, a FD (Flexible Disk), a hard disk, a magnetic tape, a cassette tape, an MO (Magnetic Optical Disc), an MD (Mini Disc), an IC (Integrated Circuit) card (exclusive of a memory card), an optical card, a mask ROM, an EPROM, and an EEPROM (Electronically Erasable Programmable Read-Only Memory).

According to the present embodiment described above, in the case where a window displayed on display means of an image processing apparatus is switched, a screen displayed before the switching is stepwisely switched to a screen supposed to be displayed after the switching. Accordingly, the setting screen can be switched to allow a user to readily recognize matters presented in the setting screen displayed after the switching.

Although the present invention has been described and illustrated in detail, it is clearly understood that the same is by way of illustration and example only and is not to be taken by way of limitation, the scope of the present invention being interpreted by the terms of the appended claims.

## Claims

1. An image processing apparatus (1) capable of implementing a plurality of functions, comprising:
display means (100);
first display control means (10A) for displaying, on said display means (100), a first window for inputting a setting concerned with said plurality of functions; and
second display control means (10B) for stepwisely displaying at least a portion of a second window over said first window in a manner corresponding to a type of said second window when said first window is displayed, said second window being for inputting a setting concerned with said plurality of functions.

2. The image processing apparatus (1) according to claim 1, wherein:
the image processing apparatus (1) has a plurality of different input modes for receiving settings concerned with said plurality of functions,
said first window is a window corresponding to a first input mode of said plurality of input modes, and
said second window is a window corresponding to a second input mode different from said first input mode among said plurality of input modes.

3. The image processing apparatus (1) according to claim 2, wherein:
one of said first input mode and said second input mode is an input mode for receiving selection of a function of said functions, and
the other one of said first input mode and said second input mode is an input mode for receiving selection for setting a key for inputting a setting of said selected function.

4. The image processing apparatus (1) according to any one of claims 1-3, wherein said second window is stepwisely displayed over said first window in a manner including a manner in which said second window is slid to stepwisely cover said first window.

5. The image processing apparatus (1) according to any one of claims 1-4, wherein:
said first window includes a function key (121-127) corresponding to each of said functions, and
said second window includes a window having a setting key for inputting a setting corresponding to said function key (121-127) in response to selection of said function key (121-127) in said first window.

6. The image processing apparatus (1) according to any one of claims 1-5, wherein:
said first window and said second window have a common image area, and
said second display control means (10B) lays said second window over said first window at an area other than said common image area.

7. A method for controlling an image processing apparatus including display means and capable of implementing a plurality of functions, comprising the steps of:
causing said image processing apparatus to display, on said display means, a first window for inputting a setting concerned with said plurality of functions; and
causing said image processing apparatus to stepwisely display at least a portion of a second window over said first window in a manner corresponding to a type of said second window when said first window is displayed, said second window being for inputting a setting concerned with said plurality of functions.

8. The method for controlling the image processing apparatus according to claim 7, wherein:
said image processing apparatus has a plurality of different input modes for receiving settings concerned with said plurality of functions,
said first window is a window corresponding to a first input mode of said plurality of input modes, and
said second window is a window corresponding to a second input mode different from said first input mode among said plurality of input modes.

9. The method for controlling the image processing apparatus according to claim 8, wherein:
one of said first input mode and said second input mode is an input mode for receiving selection of a function of said functions, and
the other one of said first input mode and said second input mode is an input mode for receiving selection of setting a key for inputting a setting of said selected function.

10. The method for controlling the image processing apparatus according to any one of claims 7-9. wherein said second window is stepwisely displayed over said first window in a manner including a manner in which said second window is slid to stepwisely cover said first window.

11. The method for controlling the image processing apparatus according to any one of claims 7-10, wherein:
said first window includes a function key for each of said functions, and
said second window includes a window having a setting key for inputting a setting corresponding to said function key in response to selection of said function key in said first window.

12. The method for controlling the image processing apparatus according to any one of claims 7-11, wherein:
said first window and said second window have a common image area, and
the step of causing said image processing apparatus to stepwisely display at least the portion of said second window over said first window lays said second window over said first window at an area other than said common image area.

13. A storage medium storing a program for implementing the method recited in any one of claims 7-12 in an image processing apparatus (1).
